# EUROPEAN PATENT APPLICATION

(11) **EP 3 203 754 A1**
(43) Date of publication of application: **09.08.2017**
(21) Application number: 14903087.6
(22) Date of filing: 29.11.2014
(51) Int. Cl.: H04N 21/436

(54) **METHOD AND SYSTEM FOR REALIZING STREAMING MEDIA DATA SEAMLESSLY CONNECTING IN INTELLIGENT HOME**

(30) Priority: 29.09.2014 CN 201410513217
(71) Applicant: Yulong Computer Telecommunication Scientific (Shenzhen) Co. Ltd., Shenzhen, Guangdong 518057 (CN)
(72) Inventor: JIANG, Yuelong, Shenzhen Guangdong 518057 (CN)
(74) Representative: Thibon, Laurent
(86) International application number: PCT/CN2014/092604
(87) International publication number: WO 2016/049976

(57) **Abstract**

The present application is applied to the field of communication technology, and provides a method and system for realizing seamless connection of streaming media data in a smart home.The method includes: caching, by a streaming media server, streaming media data between a current frame and a latest streaming media data frame in a streaming media file, the latest streaming media data frame is a streaming media data frame last received from a network, and the current frame is a first streaming media data frame corresponding to a current play progress when a first client plays the streaming media file; transmitting, by the streaming media server, streaming media data starting from the current frame to a second client requesting the streaming media file; transmitting, by the second client, a second streaming media data frame corresponding to a current play progress when playing the streaming media file to the streaming media server. In the present disclosure, when two mutually isolated terminals play the streaming media data, one terminal may resume contents of another terminal and fast seamless switch is achieved, thereby making the streaming media data be more easily transferred between different smart terminals.

## Description

### Technical Field

The present disclosure relates to the field of communication technology, and particularly relates to a method and system for realizing seamless connection of streaming media data in a smart home.

### Background

A mobile streaming media technology is one kind of technology of placing continuous video/audio information, after being compressed, on a streaming media server to make a user watch it while downloading through a mobile terminal, without waiting for downloading the whole compressed file on his or her machine. This technology firstly creates a buffer on a computer, and downloads a piece of data as a buffering in advance before playing; when an actual connection speed of the network is smaller than a speed of playing the consumed data, a playing application may acquire this piece of data in the buffer to avoid interruption of playing and also maintain the playing quality. It relates to multiple technologies such as acquisition, compression, storage, transmission and network communication of streaming media data.

At present, in a smart home, two mutually isolated smart terminals may not realize resuming and fast seamless switch when playing the streaming media data, and the streaming media data may not be fast transferred between different smart terminals. A streaming media service requires high real time. When the streaming media service is switched from one mobile terminal to another mobile terminal and is continued to be performed, bad conditions such as streaming media playing jamming, delaying and severe video quality jittering will usually be caused because the switch delay is relatively large, and unpleasant effects on a watching experience will be brought to the user. For example, when the user watches a program on a television in the living room, if the user wants to watch the program, which is previously watched on the television in the living room, on a mobile phone after going to the bedroom, the user can only reload the program on the mobile phone and not perform fast resuming and fast seamless switch in the prior art. Accordingly, for a platform across different systems, it is particularly important for seamless switch of the streaming media to solve a problem of receiving a video service by the user.

In conclusion, it is apparent that there exists inconvenience and defects in actual use in the prior art, and thus it is necessary to be improved.

### Summary

With respect to the above defects, the object of the present disclosure is to provide a method and system for realizing seamless connection of streaming media data in a smart home. When two mutually isolated terminals play the streaming media data, the method and system may achieve resuming contents of the other terminal on one terminal, and achieve fast seamless switch, thereby making the streaming media data be more easily transferred between different smart terminals.

To achieve the above object, the present disclosure provides a method for realizing seamless connection of streaming media data in a smart home, including:
a streaming media server caches streaming media data between a current frame and a recent streaming media data frame in a streaming media file, wherein the recent streaming media data frame is a streaming media data frame recently received from a network, and the current frame is a first streaming media data frame corresponding to a current play progress when a first client plays the streaming media file;
the streaming media server transmits streaming media data starting from the current frame to a second client of requesting the streaming media file; and
the second client transmits a second streaming media data frame corresponding to a current play progress when playing the streaming media file to the streaming media server.

According to the method of the disclosure, the step that the streaming media server transmits streaming media data starting from the current frame to a second client of requesting the streaming media file includes:
the streaming media server transmits a multicast command to the second client and transmits streaming media data starting from the current frame to the second client in a unicast or multicast manner;
the step that the second client transmits a second streaming media data frame corresponding to the current play progress when playing the streaming media file to the streaming media server includes:
the second client transmits a second streaming media data frame corresponding to a current play progress when playing the streaming media file to the streaming media server in a unicast manner.

According to the method of the disclosure, the method further includes:
the streaming media server creates and maintains a media playing information database, wherein the media playing information database stores an association relationship among media information and time node information, and the streaming media data frame corresponding to the current play progress;
after the step that the second client transmits a second streaming media data frame corresponding to a current play progress when playing the streaming media file to the streaming media server in a unicast manner, it further includes:
the streaming media server updates the association relationship among the media information and the time node information in the media playing information database, and the streaming media data frame corresponding to the current play progress.

According to the method of the disclosure, the method further includes:
the streaming media server receives user interface selection information and input information transmitted by the first client or the second client;
the streaming media server confirms a pre-selected streaming media file according to recorded behavior record information of a user, and pre-decodes and/or decompresses the pre-selected streaming media file;
the streaming media server transmits the pre-decoded and/or decompressed data of the streaming media file to the first client or the second client after receiving pre-selected streaming media file selected information transmitted by the first client or the second client.

According to the method of the disclosure, the method further includes:
the streaming media server receives difference data between audio data processing delay and video data processing delay transmitted by the first client or the second client; and
the streaming media server transmits a video data to the first client or the second client ahead of an audio data with the same timestamp, wherein the time of transmitting the video data in advance is determined according to the difference data.

The disclosure further provides a system for realizing seamless connection of streaming media data in a smart home, including a streaming media server, a first client and a second client;
the streaming media server includes:
a caching module, which is configured to cache streaming media data between a current frame and a recent streaming media data frame in a streaming media file, wherein the recent streaming media data frame is a streaming media data frame recently received from a network, and the current frame is a first streaming media data frame corresponding to a current play progress when a first client plays the streaming media file;
a data transmission module, which is configured to transmit streaming media data starting from the current frame to a second client of requesting the streaming media file; and
the second client is configured to transmit a second streaming media data frame corresponding to a current play progress when playing the streaming media file to the streaming media server.

According to the system of the disclosure, the data transmission module is further configured to transmit a multicast command to the second client and transmit streaming media data starting from the current frame to the second client in a unicast or multicast manner;
the second client is further configured to transmit a second streaming media data frame corresponding to a current play progress when playing the streaming media file to the streaming media server in a unicast manner.

According to the system of the disclosure, the streaming media server further includes a database management module, which is configured to create and maintain a media playing information database, wherein the media playing information database stores an association relationship among media information and time node information, and the streaming media data frame corresponding to the current play progress;
the database management module is further configured to update the association relationship among the media information and the time node information in the media playing information database, and the streaming media data frame corresponding to the current play progress.

According to the system of the disclosure, the streaming media server further includes a user behavior information processing module and a decoding/decompressing module,
the streaming media server is further configured to receive user interface selection information and input information transmitted by the first client or the second client;
the user behavior information processing module is configured to confirm a pre-selected streaming media file according to recorded behavior record information of a user, and the decoding/decompressing module is configured to pre-decode and/or decompress data of the pre-selected streaming media file; and
after the streaming media server receives pre-selected streaming media file selected information transmitted by the first client or the second client, the data transmission module is configured to transmit the pre-decoded and/or decompressed data of the streaming media file to the first client or the second client.

According to the system of the disclosure, the streaming media server is further configured to receive difference data between audio data processing delay and video data processing delay transmitted by the first client or the second client; and transmit a video data to the first client or the second client ahead of an audio data with the same timestamp, wherein the time of transmitting the video data in advance is determined according to the difference data.

A streaming media sever of the disclosure caches data between a current frame and a recent streaming media data frame in a streaming media file; when the streaming media server receives a downloading request of a user for the same streaming media file at a second client, the streaming media server transmits the streaming media data starting from the current frame to the second client, the second client transmits a second streaming media data frame corresponding to a current play progress when the user plays the streaming media file to the streaming media server for storage. Particularly, the streaming media server downloads, from the network, and caches the streaming media file requested by the first client, and the streaming media server transmits the streaming media file to the first client, the first client transmits a first streaming media data frame corresponding to the current progress when the user plays the streaming media file to the streaming media server for storage, and the streaming media server caches streaming media data between the first streaming media data frame and the recently downloaded streaming media data frame; when the first client pauses or stops playing, the streaming media server stores the first streaming media data frame corresponding to a play progress when the first client pauses or stops playing, and caches streaming media data between the first streaming media data frame corresponding to the play progress when the first client pauses or stops playing and the recently downloaded streaming media data frame; when the user replays the same streaming media file from the second client, the streaming media server transmits the streaming media data starting from the first streaming media data frame corresponding to the play progress when the first client pauses or stops playing last time to the second client. Thereby, the disclosure may realize that one terminal continuously plays a content of the other terminal when two mutually isolated terminals play the streaming media data, and achieves fast seamless switch, thereby making the streaming media data be more easily transferred between different smart terminals.

### Brief Description of the Drawings

FIG. 1 is a block diagram of a system for realizing seamless connection of streaming media data in a smart home according to the disclosure;
FIG. 2 is a flow diagram of predicting streaming media data by a streaming media server according to an embodiment of the disclosure;
FIG. 3 is a flow diagram of predicting streaming media data by a streaming media server according to another embodiment of the disclosure; and
FIG. 4 is a flow diagram of a method for realizing seamless connection of streaming media data in a smart home according to the disclosure.

### Detailed description

To make the object, technical solutions and advantages of the disclosure more apparent, the disclosure will be described in detail below in conjunction with accompanying drawings and embodiments. It should be understood that the particular embodiments described herein are merely used for explaining the present disclosure, but not limiting the present disclosure.

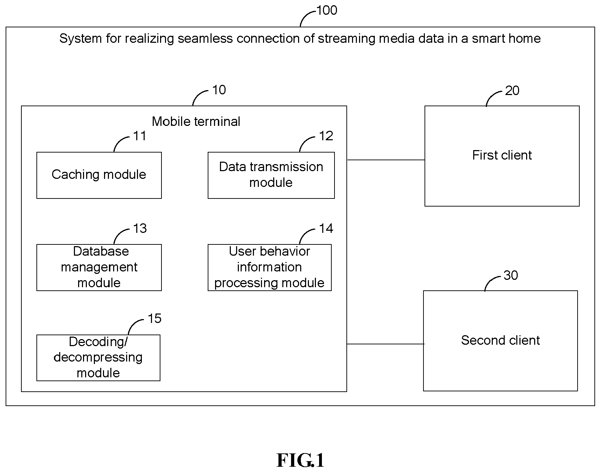

As shown in FIG. 1, the present disclosure provides a system 100 for realizing seamless connection of streaming media data in a smart home, including a streaming media server 10, a first client 20 and a second client 30. The streaming media server 10 may be a smart device such as a smart router or a smart box, the first client 20 and the second client 30 may be a smart device such as a smart television, a smart box, a smart phone or a tablet computer. The system 100 is a software unit, a hardware unit or a combination unit of software and hardware built in the smart device. The streaming media server 10 includes a caching module 11 and a data transmission module 12.

The caching module 11 is configured to cache streaming media data between a latest streaming media data frame and a current frame in a streaming media file. The latest streaming media data frame is a streaming media data frame last received from a network, is a certain frame between the current frame and the last frame (an ending frame) of the streaming media file, and may be determined according to a selection of a user. The current frame is a first streaming media data frame corresponding to a current play progress when the first client 20 plays the streaming media file. The streaming media file is generally stored in a network node of a content sharing network, and the streaming media server 10 downloads the streaming media file from the network node via a network when receiving an on-demand request. Before completing the downloading of the streaming media file, the streaming media server 10 continuously receives the streaming media data from the network, and the latest streaming media data frame is continuously updated with the receiving of the data.

Preferably, the caching module 11 caches the streaming media data between an I frame last received from the network and the current frame in the streaming media file. Particularly, a code stream structure defined by an existing video coding standard is a layered structure, including layers such as Group of Picture, Pictures, Macroblock (MB).. Generally, one group of picture includes an I frame (Intraframe coding frame), a P frame (Forward Prediction coding frame) and a B frame (Bidirectional Interpolated Prediction coding frame). The I frame serves as a "starting frame", which is coded only by utilizing spatial information without reference to other images, and may serve as a reference point of random access and a breakpoint of error diffusion; the P frame means a coded image that compresses the volume of transmission data by fully reducing temporal redundancy information of the preceding coded frame in an image sequence, which is also called as a prediction frame; the B frame means a coded image that compresses the volume of transmission data by considering both the temporal redundancy information with the preceding coded frame in a source image sequence and that with the subsequent coded frame in the source image sequence, which is also called as a bidirectional prediction frame. Because the image quality of the B frame depends on the preceding frame and the subsequent frame, in a process of transmitting streaming media, if all frames in one GOP (Group of Pictures) are not completely transmitted, the quality of frame images the transmission of which has completed in the GOP will be relatively poor. In the disclosure, the caching module 11 caches a latest I frame received from the network in the streaming media file, so that good quality of cached images can be ensured, and the space is saved.

The data transmission module 12 is configured to transmit streaming media data starting from the current frame to the second client 30 requesting the streaming media file. Preferably, the data transmission module 12 is further configured to transmit a multicast command to the second client 30 and transmit the streaming media data starting from the current frame to the second client in a unicast or multicast manner. Particularly, the data transmission module 12 transmits the same multicast command to all clients requesting the same streaming media file and transmits the streaming media data to the clients in the unicast or the same multicast manner.

The second client 30 is configured to transmit a second streaming media data frame corresponding to a current play progress when the client 20 plays the streaming media file to the streaming media server 10. Preferably, the second client 30 transmits a streaming media data frame corresponding to a current play progress when playing the streaming media file to the streaming media server 10 in a unicast manner. Moreover, the streaming media server 10 updates the first streaming media data frame stored therein as the second streaming media data frame upon the receipt of the second streaming media data frame, so as to facilitate transmitting a streaming media data starting from the second streaming media data frame to other clients when the other clients (including the first client 10) request the same streaming media file.

The streaming media server 10 of the disclosure caches data in the streaming media file between the latest streaming media data frame and the current frame when the user plays the streaming media file at the first client 20. When the streaming media server 10 receives a downloading request of the user for the same streaming media file at the second client 30, the streaming media server 10 transmits the streaming media data starting from the current frame to the second client 30, and the second client 30 transmits the second streaming media data frame corresponding to the current play progress when the user plays the streaming media file to the streaming media server 10 for storage, so as to facilitate transmitting the streaming media data starting from the second streaming media data frame to other clients when the other clients (including the first client 10) request the same streaming media file.

Particularly, the streaming media sever 10 downloads and caches the streaming media file requested by the first client 20, and the streaming media server 10 transmits the streaming media file to the first client 20, then the first client 20 transmits the first streaming media data frame corresponding to a current progress when the user plays the streaming media file to the streaming media server 10 for storage, and the streaming media server 10 caches a streaming media data between the first streaming media data frame and the last downloaded streaming media data frame; when the first client 20 pauses or stops playing, the streaming media server 10 is stored with the first streaming media data frame corresponding to a play progress when the first client 20 pauses or stops playing, and has cached streaming media data between the first streaming media data frame corresponding to the play progress when pausing or stopping the play and the last downloaded streaming media data frame; when the user further requests to play the same streaming media file from the second client 30, the streaming media server 10 transmits the streaming media data starting from the first streaming media data frame corresponding to the play progress when pausing or stopping the play last time to the second client 30. Thereby, the following may be achieved by the disclosure: when two mutually isolated terminals play the streaming media data, one terminal may resume contents of another terminal and fast seamless switch is achieved, thereby making the streaming media data be more easily transferred between different smart terminals.

Real-time transmission of streaming media data of multilevel smart devices of the smart home is controlled by mainly employing the method of controlling media stream transmission established by a RTSP (Real Time Streaming Protocol). The RTSP as a scalable framework makes the control of real-time data such as audio and video and resuming a plurality of data transmission connections possible, and provides approaches to select a transmission channel, such as a UDP (User Datagram Protocol), a multicast UDP and a TCP (Transmission Control Protocol). The RTSP control information and the media data stream are interleaved together to be transmitted, and an approach is provided for controlling a plurality of data transmission connections, and selecting the transmission channels, and a method is provided for a transmission mechanism on a RTP (Realtime Transport Protocol).

Preferably, the streaming media server 10 further includes a database management module 13, which is configured to create and maintain a media playing information database, wherein the media playing information database is stored with an association relationship between media information and time node information, the streaming media data frame corresponding to the current play progress. The database management module 13 is further configured to update the association relationship in the media playing information database between the media information and the time node information, the streaming media data frame corresponding to the current play progress. The time node information and the streaming media data frame corresponding to the current play progress are interleaved with RTSP control information and media data streams together by the first client 20 and/or the second client 30 to be transmitted to the streaming media server 10 through the RTP/RTCP. In the prior art, the media file is sectionally transmitted according to time when the streaming media data is transmitted, and the streaming media data is downloaded starting from a time node when resumed by the user. In the present disclosure, the streaming media server 10 may be positioned to the streaming media data frame corresponding to the last play progress of the user by creating a media playing information database, storing time node information and a particular streaming media data frame when played by the user.

Because the streaming media server 10 records and stores last playing data and last playing time, when the user performs a resuming, the streaming media server 10 calls "seekto" to acquire last playing position through a getCurrentPosition method and acquire last playing time node, playing data and playing position. The streaming media server 10 transmits the same multicast command to all clients requesting the same streaming media data through a network layer; the streaming media server 10 transmits the streaming media data starting from the current frame to all clients in the unicast or the multicast manner. A judgment is made when other clients play the file in the next time. The file will be directly played from start if it is played for the first time, and will be resumed from last recorded time node if it has been played, that is, it may be played from the recorded point, thereby realizing resuming of streaming media between different devices, without pulling a progress bar to a certain position again.

Preferably, the streaming media server 10 further includes a user behavior information processing module 14 and a decoding/decompressing module 15, wherein the streaming media server 10 is further configured to receive user interface selection information and input information sent by the first client 20 or the second client 30; the user behavior information processing module 14 determines a pre-selected streaming media file according to recorded behavior record information of a user, and the decoding/decompressing module 15 pre-decodes and/or pre-decompresses data of the pre-selected streaming media file; and after the streaming media server 10 receives a selection information for pre-selected streaming media file sent by the first client 20 or the second client 30, the data transmission module 12 transmits the pre-decoded and/or pre-decompressed data of the streaming media file to the client 20, thereby enabling the streaming media file to be decoded, decompressed and displayed earlier.

In one embodiment, the client receives a user input, and marks one program possibly selected by a user. The marked program may be one program selected according to the user input, or when the marked program is selected (determined by the user behavior information processing module 13), one program to expected be selected based on the user input. The user input may be used to evoke a program guide, a user navigation on the program guide, a keyboard input of a remote control unit, and the like. The streaming media server 10 pre-decodes and/or pre-decompresses the marked program, so that the program may be early decompressed and displayed if it is subsequently selected by other clients. In the process of pre-decoding and/or pre-decompressing by the streaming media server 10, the client continuously receives, decompresses and displays current program until all information required by receiving and decoding the new program is obtained.

In a case of processing streaming media, the decoding refers to processing or channel decoding at a physical-layer receiver, and the decompressing refers to processing or resource decoding at a high-layer receiver; after overhead information is obtained, the client decompresses current program thereof. Video stream and keywords (a playing time node, playing data, a program starting point, a current playing point and a program ending point) of the streaming media are packetized before the video stream being compressed. In the present disclosure, current program and new program are transmitted by using layered coding; and for pre-decoding, the streaming media server 10 receives the user input and identifies the program possibly selected by the user via the user behavior information processing module 13.

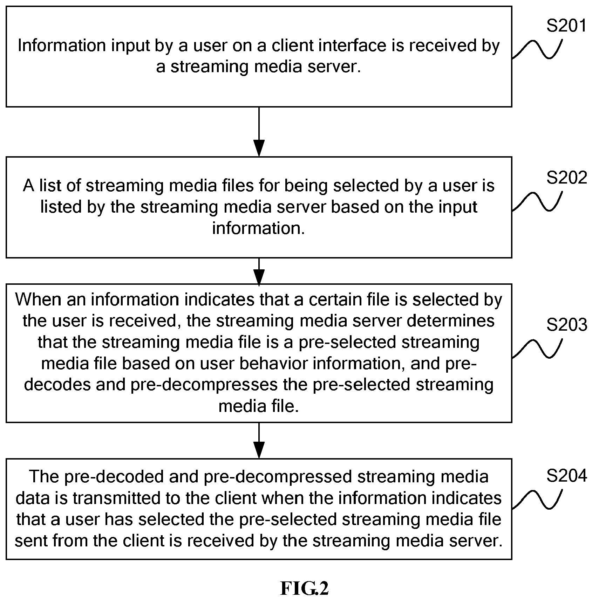

FIG. 2 is a flow diagram of predicting streaming media data by a streaming media server according to an embodiment of the present disclosure. This flow includes:
In Step S201, information input by a user on a client interface is received by a streaming media server. For example, the user inputs "A Bite of China" on the client interface.
In Step S202, a list of streaming media files for being selected by a user is listed by the streaming media server based on the input information. Continuing with the previous example, a plurality of streaming media files with keywords "A Bite of China" is listed by the streaming media server 10 for being selected by the user.
In Step S203, when an information indicates that a certain file is selected by the user is received, the streaming media server determines that the streaming media file is a pre-selected streaming media file based on user behavior information, and pre-decodes and pre-decompresses the pre-selected streaming media file. Continuing with the previous example, a certain streaming media file is highlighted when the user moves a cursor to the streaming media file, thus it is deemed by the streaming media server 10 that the user is going to select the streaming media file, and pre-decodes and pre-decompresses the streaming media file.
In Step S204, the pre-decoded and pre-decompressed streaming media data is transmitted to the client when the information indicates that a user has selected the pre-selected streaming media file sent from the client is received by the streaming media server. Continuing with the previous example, when the user selects (clicks) the highlighted streaming media file, the streaming media server transmits the pre-decoded and pre-decompressed streaming media data to the client. Thereby, the streaming media file may be early decoded, decompressed and displayed.

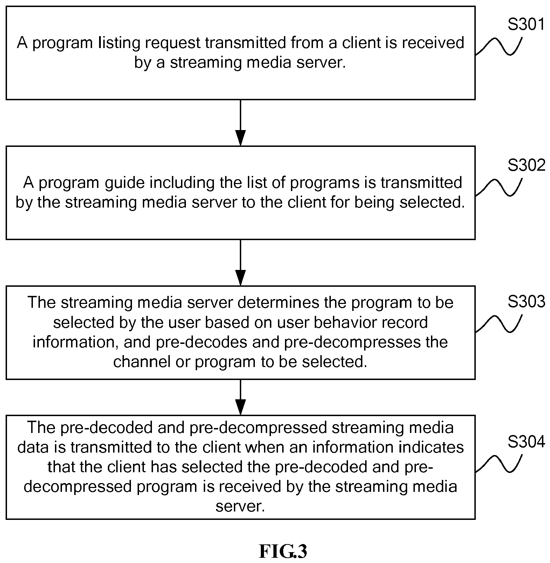

FIG. 3 is a flow diagram of predicting streaming media data by a streaming media server according to another embodiment of the present disclosure. This flow includes:
In Step S301, a program listing request transmitted from a client is received by a streaming media server. For example, the user selects a program listing on a client interface, or the user clicks a program listing button by employing a remote controller.
In Step S302, a program guide including the list of programs is transmitted by the streaming media server to the client for being selected. Continuing with the previous example, the streaming media server 10 (for example, a smart router) transmits a channel list to a smart box or a smart television.
In Step S303, the streaming media server determines the program to be selected by the user based on user behavior record information, and pre-decodes and pre-decompresses the channel or program to be selected. Continuing with the previous example, the streaming media server 10 determines that the user is going to select "Hu'nan Satellite TV" based on user habit information, and then decodes and decompresses streaming media files corresponding to the Hu'nan Satellite TV.
In Step S304, the pre-decoded and pre-decompressed streaming media data is transmitted to the client when an information indicates that the client has selected the pre-decoded and pre-decompressed program is received by the streaming media server. Continuing with the previous example, when the user has selected the "Hu'nan Satellite TV" on the smart box or the smart television, the streaming media server 10 transmits the pre-decoded and pre-decompressed streaming media data to the smart box or the smart television. Thereby, the streaming media file may be early decoded, decompressed and displayed.

Preferably, the streaming media server 10 is further configured to receive difference data between audio data processing delay and video data processing delay transmitted by the first client 20 or the second client 30; and transmit a video data to the first client 20 or the second client 30 ahead of an audio data with the same timestamp, wherein the time that the video data is transmitted in advance is determined based on the difference data. Audio and video data packets of the streaming media file are separately transmitted in network transmission, and the streaming media files such as compressed audio and video are played and watched after being decoded by using a player as well as related hardware and software at the client. Decoding and transmission speeds of the audio and the video are different (generally, the decoding and transmission speed of audios are higher than that of videos), which results in non-synchronization of the decoded audio and the decoded video. In the prior art, after corresponding decoding of the audio and video data is completed, times of transmitting the audio to a speaker and transmitting the video to a LCD for display are determined by comparing timestamps of individual frames of audio and video, in this way, time deviations, produced in transmitting and decoding processes by devices, of the audio and the video may be respectively minimized, while the streaming media data transmitted to the client may not be early played, and the data may be buffered at the client. Therefore, according to the present disclosure, by receiving difference data between audio data processing delay and video data processing delay transmitted from the client, a video data is transmitted to the client ahead of an audio data with the same timestamp. Although the decoding speed and the transmitting speed of the video data are lower than those of the audio data, synchronization or small buffering of the decoded audio and the video is realized at the client due to early transmission of the video data, thus suitable time alignment between the video and the audio is obtained. This enables the smart router, the smart television, or the smart box to be early displayed in a program change, thereby providing a fast response for the program change.

Application scenarios of the present disclosure are as follows:
1. Smart devices such as a smart television, a smart router, a television box, a mobile phone or an iPad are inter-connected by a user. The user watches a movie outdoors through a mobile phone, and then may continue to watch (resuming) a preceding certain time period of the movie program on the iPad at home, without manually pulling a progress bar to the certain time period of the movie program, so that resuming (seamless switch of the streaming media data) of a movie video program may be realized between different smart terminals.
2. Smart devices such as a smart television, a smart router, a television box, a mobile phone or an iPad are inter-connected by a user. The user watches a movie or a program on a mobile phone in the living room, and then may open the television or television box to continue to watch (resuming) a preceding certain time period of the movie or television program in the room, without manually pulling a progress bar to the certain time period of the movie program, that is, resuming (seamless switch of the streaming media data) of a movie video program may be realized between different smart terminals.
3. Smart devices such as a smart television, a smart router, a television box, a mobile phone or an iPad are inter-connected by a user. The user watches a movie or a program through the smart television in the room. The smart router or smart television box may predict which programs are desired to be watched by the user based on the program watching habits or content watching frequencies of the user, and the smart router and the television box may pre-download or pre-load the programs based on these habits and frequencies, thereby facilitating direct watching as needed and reducing buffering.

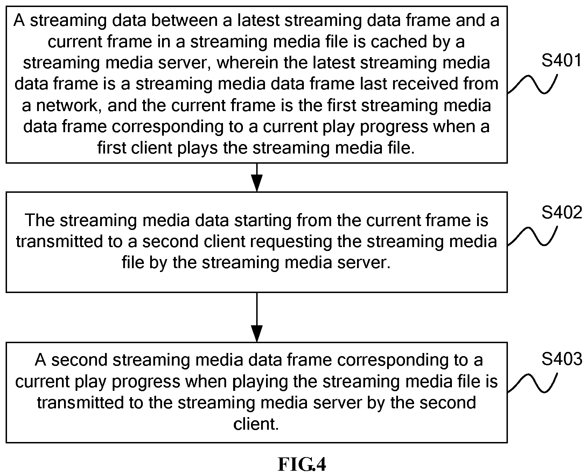

As shown in FIG. 4, the present disclosure further provides a method for realizing seamless connection of streaming media data in a smart home, which is implemented by the system as shown in FIG. 1. The method includes:
In Step S401, streaming data between a latest streaming data frame and a current frame in a streaming media file is cached by a streaming media server, wherein the latest streaming media data frame is a streaming media data frame last received from a network, and the current frame is the first streaming media data frame corresponding to a current play progress when a first client plays the streaming media file. The step is implemented by the caching module 11.
In Step S402, the streaming media data starting from the current frame is transmitted to a second client requesting the streaming media file by the streaming media server. The step is implemented by the data transmission module 12. Preferably, the step further includes: the streaming media server transmits a multicast command to the second client and transmits streaming media data starting from the current frame to the second client in a unicast or multicast manner.
In Step S403, a second streaming media data frame corresponding to a current play progress when playing the streaming media file is transmitted to the streaming media server by the second client. The step is implemented by the second client 30. Preferably, the step further includes: the second streaming media data frame corresponding to a current play progress when playing the streaming media file is transmitted to the streaming media server by the second client in a unicast manner. Moreover, the streaming media server updates the first streaming media data frame stored therein as the second streaming media data frame when the second streaming media data frame is received, so as to facilitate transmitting the streaming media data starting from the second streaming media data frame to other clients (including the first client) when the other clients request the same streaming media file.

Preferably, the method further includes: a media playing information database is created and maintained by the streaming media server, wherein the media playing information database is stored with an association relationship between media information and time node information, the streaming media data frame corresponding to the current play progress; after the step that the second streaming media data frame corresponding to a current play progress when playing the streaming media file is transmitted to the streaming media server by the second client in a unicast manner, the method further includes: the association relationship between the media information and the time node information, the streaming media data frame corresponding to the current play progress in the media playing information database is updated by the streaming media server.

Preferably, the method further includes: user interface selection information and input information transmitted from the first client or the second client are received by the streaming media server; a pre-selected streaming media file is determined by the streaming media server based on recorded behavior record information of a user, and the pre-selected streaming media file is pre-decoded and/or pre-decompressed; and the pre-decoded and/or pre-decompressed streaming media file is transmitted to the first client or the second client by the streaming media server after receiving pre-selected streaming media file selected information transmitted from the first client or the second client.

Preferably, the method further includes: difference data between audio data processing delay and video data processing delay transmitted from the first client or the second client is received by the streaming media server; and a video data is transmitted to the first client or the second client ahead of an audio data with the same timestamp by the streaming media server, wherein the time that the video data is transmitted in advance is determined based on the difference data.

In conclusion, the present disclosure solves the problem that there is no method for performing seamless connection of a streaming media data service between individual smart terminals in a conventional smart home. There is information of previous actions of the user in the smart router as well, and the information may be utilized to predict a further selection of the user. To obtain faster switch between the programs, before the user selects the program, the smart router (streaming media server) may execute pre-decoding on the related program. A function that resuming of streaming media may be realized on different devices such as the television and the box of the smart home is achieved; in this way, a perfect experience may be brought to the user, and thus operation habits and real-time requirements of the user are satisfied, and the experience of the user is improved.

Certainly, the present disclosure may have many other embodiments. Those skilled in the art may make various corresponding changes and variations according to the present disclosure without departing from the spirit and its essence of the present disclosure, however, these corresponding changes and variations should all fall in a protective scope of the claims appended in the present disclosure.

## Claims

1. A method for realizing seamless connection of streaming media data in a smart home, **characterized by** comprising:
caching, by a streaming media server, streaming media data between a current frame and a latest streaming media data frame in a streaming media file, wherein the latest streaming media data frame is a streaming media data frame last received from a network, and the current frame is a first streaming media data frame corresponding to a current play progress when a first client plays the streaming media file;
transmitting, by the streaming media server, streaming media data starting from the current frame to a second client requesting the streaming media file; and
transmitting, by the second client, a second streaming media data frame corresponding to a current play progress when playing the streaming media file to the streaming media server.

2. The method according to claim 1, wherein the step of transmitting, by the streaming media server, streaming media data starting from the current frame to a second client requesting the streaming media file comprises:
transmitting, by the streaming media server, a multicast command to the second client and transmitting the streaming media data starting from the current frame to the second client in a unicast or multicast manner;
the step of transmitting, by the second client, a second streaming media data frame corresponding to a current play progress when playing the streaming media file to the streaming media server comprises:
transmitting, by the second client, the second streaming media data frame corresponding to the current play progress when playing the streaming media file to the streaming media server in a unicast manner.

3. The method according to claim 1, further comprising:
creating and maintaining a media playing information database by the streaming media server, wherein the media playing information database is stored with an association relationship between media information and time node information, the streaming media data frame corresponding to the current play progress;
after transmitting, by the second client, a second streaming media data frame corresponding to a current play progress when playing the streaming media file to the streaming media server in a unicast manner, further comprising:
updating, by the streaming media server, the association relationship between the media information and the time node information, the streaming media data frame corresponding to the current play progress in the media playing information database.

4. The method according to claim 1, further comprising:
receiving, by the streaming media server, user interface selection information and input information transmitted from the first client or the second client;
determining, by the streaming media server, a pre-selected streaming media file based on recorded behavior record information of a user, and pre-decoding and/or pre-decompressing the pre-selected streaming media file; and
transmitting, by the streaming media server, the pre-decoded and/or pre-decompressed data of the streaming media file to the first client or the second client after receiving pre-selected streaming media file selected information transmitted from the first client or the second client.

5. The method according to claim 1, further comprising:
receiving, by the streaming media server, difference data between audio data processing delay and video data processing delay transmitted from the first client or the second client; and
transmitting, by the streaming media server, a video data to the first client or the second client ahead of an audio data with the same timestamp, wherein the time that the video data is transmitted in advance is determined based on the difference data.

6. A system for realizing seamless connection of streaming media data in a smart home, **characterized by** comprising a streaming media server, a first client and a second client;
the streaming media server comprises:
a caching module, configured to cache streaming media data between a current frame and a latest streaming media data frame in a streaming media file, wherein the latest streaming media data frame is a streaming media data frame last received from a network, and the current frame is a first streaming media data frame corresponding to a current play progress when the first client plays the streaming media file;
a data transmission module, configured to transmit streaming media data starting from the current frame to the second client requesting the streaming media file;
the second client is configured to transmit a second streaming media data frame corresponding to a current play progress when playing the streaming media file to the streaming media server.

7. The system according to claim 6, wherein the data transmission module is further configured to transmit a multicast command to the second client and transmit streaming media data starting from the current frame to the second client in a unicast or multicast manner; and
the second client is further configured to transmit the second streaming media data frame corresponding to the current play progress when playing the streaming media file to the streaming media server in a unicast manner.

8. The system according to claim 6, wherein the streaming media server further comprises a database management module configured to create and maintain a media playing information database, wherein the media playing information database is stored with an association relationship between media information and time node information, the streaming media data frame corresponding to the current play progress; and
the database management module is further configured to update the association relationship between the media information and the time node information, the streaming media data frame corresponding to the current play progress in the media playing information database.

9. The system according to claim 6, wherein the streaming media server further comprises a user behavior information processing module and a decoding/decompressing module,
the streaming media server is further configured to receive user interface selection information and input information transmitted from the first client or the second client;
the user behavior information processing module determines a pre-selected streaming media file based on recorded behavior record information of a user, and the decoding/decompressing module pre-decodes and/or pre-decompresses data of the pre-selected streaming media file; and
after the streaming media server receives pre-selected streaming media file selected information transmitted from the first client or the second client, the data transmission module transmits the pre-decoded and/or pre-decompressed data of the streaming media file to the first client or the second client.

10. The system according to claim 6, wherein the streaming media server is further configured to receive difference data between audio data processing delay and video data processing delay transmitted from the first client or the second client; and transmit a video data to the first client or the second client ahead of an audio data with the same timestamp, wherein the time that the video data is transmitted in advance is determined based on the difference data.
